# EUROPÄISCHE PATENTSCHRIFT

(11) **EP 2 888 137 B1**
(45) Veröffentlichungstag und Bekanntmachung des Hinweises auf die Patenterteilung: **13.02.2019**
(21) Anmeldenummer: 12812249.6
(22) Anmeldetag: 20.12.2012
(51) Int. Cl.: B60S 3/04

(54) **FAHRZEUGBEHANDLUNGSANLAGE UND VERFAHREN ZU DEREN BETRIEB**
VEHICLE TREATMENT INSTALLATION AND METHOD FOR OPERATING THE SAME
INSTALLATION DE TRAITEMENT POUR VÉHICULE ET PROCÉDÉ DE FONCTIONNEMENT CORRESPONDANT

(30) Priorität: 24.08.2012 DE 202012103214 U
(43) Veröffentlichungstag der Anmeldung: 01.07.2015
(73) Patentinhaber: WashTec Holding GmbH, 86153 Augsburg (DE)
(72) Erfinder: AUER, Robert, 86391 STADTBERGEN (DE)
(74) Vertreter: Reitstötter Kinzebach
(86) Internationale Anmeldenummer: PCT/EP2012/076475
(87) Internationale Veröffentlichungsnummer: WO 2014/029450

(56) Entgegenhaltungen:
- DE-A1- 2 002 565
- DE-A1- 10 134 358
- DE-U1- 29 903 300
- US-A- 5 482 212

## Beschreibung

Die Erfindung betrifft eine Fahrzeugbehandlungsanlage nach dem Oberbegriff des Anspruchs 1 sowie ein Verfahren zu deren Betrieb nach dem Oberbegriff des Anspruchs 9.

Im Stand der Technik sind Fahrzeugbehandlungsanlagen bekannt, welche das Fahrzeug samt Fahrer mittels einer Fördereinrichtung von einer Einfahrt der Fahrzeugbehandlungsanlage an deren Behandlungseinrichtungen vorbei zu ihrer Ausfahrt transportiert, wobei das Fahrzeug nicht selbst fährt. Solche Fahrzeugbehandlungsanlagen werden oft auch als Schleppanlagen oder Waschstraße bezeichnet und sind dem Fachmann hinlänglich bekannt.

Eine solche Fahrzeugbehandlungsanlage offenbart die DE 20 025 65, wobei dort ein zu behandelndes Fahrzeug von einer Einlaufstation mittels Schlepprollen, welche an einer endlos umlaufenden Förderkette angebracht sind, durch die Fahrzeugbehandlungsanlage zu einer Auslaufstation transportiert wird. Während des Transports ist der Fahrzeugmotor ausgekuppelt und die Bremsen geöffnet, so dass das Fahrzeug einfach und ohne großen Widerstand durch die Fahrzeugbehandlungsanlage transportiert werden kann. Ist das Fahrzeug an der Auslaufstation angekommen, gelangt die Schlepprolle außer Eingriff mit dem Fahrzeugrad, und eine an sich bekannte Ampel mit rotem Stoppsignal und grünem Ausfahrsignal signalisiert dem Fahrer, dass er den Motor anlassen und das Fahrzeug aus der Fahrzeugbehandlungsanlage ausfahren kann. DE 20 025 65 offenbart den Oberbegriff des Anspruchs 1.

Eine solche Ampel ist an der Ausfahrt der Waschstraße der DE 101 34 358 A1 vorgesehen, welche dem Fahrer signalisiert, wann das Transportsystem sein Fahrzeug freigegeben hat und er aus der Waschstraße ausfahren soll.

Ein Vorteil von Fahrzeugbehandlungsanlagen mit Zwangsförderung des zu behandelnden Fahrzeugs mittels einer Fördereinrichtung ist, dass die Fördergeschwindigkeit innerhalb bestimmter Grenzen eingestellt und somit an die Anzahl der zu behandelnden Fahrzeuge angepasst werden kann. Wegen der vorgegebenen Abstände zwischen aufeinander folgenden Schlepprollen der Fördereinrichtung können die Fahrzeuge ohne Kollisionsgefahr relativ schnell durch die Fahrzeugbehandlungsanlage transportiert werden. Insbesondere die Fahrer müssen nicht auf den richtigen Sicherheitsabstand zum vorausfahrenden Fahrzeug achten. Es Waschperson mitgeteilt, wie viel Zeit noch bis zum Ende der bezahlten Reinigungszeit übrig ist.

Die US 2005/0234569 A1 offenbart ebenfalls eine Fahrzeugwaschanlage mit beim Waschen in einer Waschbucht ortsfest stehenden Fahrzeug, wobei dort in einen Münzautomaten Geld eingeworfen und entsprechend der eingeworfenen Geldmenge dann eine bestimmte Zeit lang das Fahrzeug gereinigt werden kann. Vor Ablauf der durch die Geldmenge bestimmten Reinigungszeit wird dann dem außerhalb des Fahrzeugs wartenden Fahrer mitgeteilt, wie viel Zeit noch bis zum Ende der bezahlten Reinigungszeit übrig ist.

Der Erfindung liegt deshalb die Aufgabe zugrunde, eine Fahrzeugbehandlungsanlage sowie ein Verfahren zu deren Betrieb bereitzustellen, welche die oben genannten Nachteile überwinden und dem Fahrer des vordersten in der Fahrzeugbehandlungsanlage befindlichen oder geförderten Fahrzeugs frühzeitig signalisieren, dass er in Kürze aus der Fahrzeugbehandlungsanlage ausfahren kann und somit ausreichend Zeit hat, sich hierauf vorzubereiten. Weiter sollen Stopps oder Verlangsamungen des Betriebs der Fahrzeugbehandlungsanlage und der Fördereinrichtung aufgrund verzögerter Ausfahrten des vordersten Fahrzeugs verhindert werden, um eine möglichst hohe Durchfahrrate an Fahrzeugen und somit möglichst viele Behandlungen in vorgegebener Zeit zu ermöglichen.

Die Erfindung löst diese Aufgabe durch eine Fahrzeugsbehandlungsanlage mit den Merkmalen des Anspruchs 1 und ein Verfahren zu deren Betrieb mit den Merkmalen des Anspruchs 9. Vorteilhafte Ausgestaltungen und zweckmäßige Weiterbildungen der Erfindung sind in den abhängigen Ansprüchen angegeben.

Eine eingangs genannte Fahrzeugbehandlungsanlage ist erfindungsgemäß dadurch gekennzeichnet, dass die Signaleinrichtung zum Ausgeben eines Ausfahrsignals und zum Ausgeben eines das Ausfahrsignal ankündigenden Vorwarnsignals während einer Vorwarnzeit eingerichtet ist. Bevorzugt kann die Fahrzeugbehandlungsanlage eine Durchfahranlage sein, bei der das Fahrzeug bei einer Einfahrt einfahren und bei einer Ausfahrt ausfahren kann und mittels Fördereinrichtung in Förderrichtung durch die Fahrzeugbehandlungsanlage zur Ausfahrt geschleppt wird.

Im Ausfahrbereich 4 ist eine für den Fahrer des vorderen Fahrzeugs A gut sichtbare Ampel 14 angeordnet, welche in bekannter Weise oben ein Rotlicht 15 und darunter ein Grünlicht 16 aufweist, welche von der Steuerung 12 angesteuert werden können.

Die Funktionsweise der an sich bekannten Fahrzeugbehandlungsanlage 1 und das Zusammenspiel der Fördereinrichtung 2 und der Ampel 14 werden nachfolgend beschrieben.

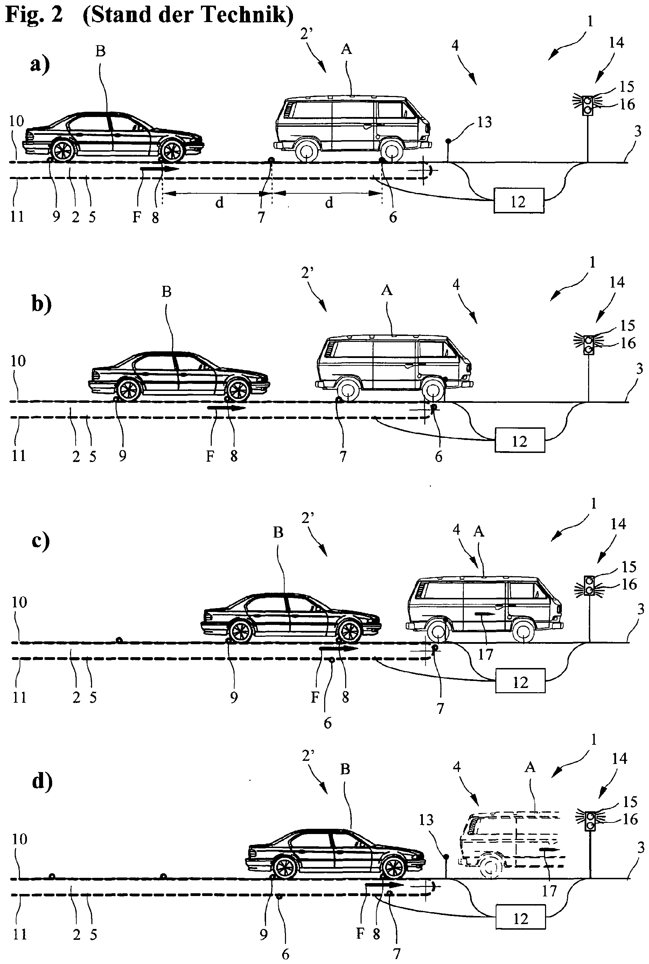

In Fig. 2 a) werden das vordere Fahrzeug A und das hintere Fahrzeug B durch die Fördereinrichtung 2 durch die Fahrzeugbehandlungsanlage 1 transportiert. Das Fahrzeug A weist einen kürzeren Radstand auf und wird von der vorderen, ersten Schlepprolle 6 geschleppt. Das Fahrzeug B weist einen längeren Radstand auf, wird aber dennoch nur durch die in Fig. 2 vordere, dritte Schlepprolle 8 durch die Fahrzeugbehandlungsanlage 1 transportiert. Die Figuren zeigen eine Kombination, bei der der Abstand der hinteren, vierten Schlepprolle 9 zum Hinterrad des hinteren Fahrzeugs B minimal ist.

In Fig. 2 b) wurde das vordere Fahrzeug A dann so weit nach vorne transportiert, dass die vordere erste Schlepprolle 6 bereits unter den Boden 3 abgetaucht ist und die hintere, zweite Schlepprolle 7 den Weitertransport des Fahrzeugs A zum Ausfahrbereich 4 hin übernimmt. Bei diesem Wechsel der das Fahrzeug A schleppenden Schlepprolle von Vorderrad auf Hinterrad bleibt das Fahrzeug A kurzzeitig (je nach Radstand) stehen, was für viele Fahrer fälschlicherweise das Ende der Behandlung darstellt - die Ampel 14 zeigt aber dennoch Rotlicht 15, was bei diesen Fahrern oft zu Verwirrung führt. Da sich das Fahrzeug A zum größten Teil noch in der Fördereinrichtung 2 befindet und evtl. noch Behandlungseinrichtungen das Fahrzeug A behandeln, beispielsweise Trockengebläse oder Trockenstreifen, soll der Fahrer das Fahrzeug A noch nicht selbst weiterfahren, um das Behandlungsprogramm vollständig abschließen zu können und die Fördereinrichtung 2 sowie evtl. noch arbeitende Behandlungseinrichtungen und das Fahrzeug A nicht zu beschädigen. In Fig. 2 a) und 2 b) ist die Ampel 14 deshalb auf Rotlicht 15 geschaltet, was dem Fahrer signalisiert, dass er noch nicht ausfahren soll.

Gelangt dann in Fig. 2 c) das Fahrzeug A so weit in den Ausfahrbereich 4, dass auch die hintere zweite Schlepprolle 7 unter den Boden 3 abtaucht, springt die Ampel 14 von Rotlicht 15 auf Grünlicht 16, womit dem Fahrer des Fahrzeugs A signalisiert wird, dass er den Motor anlassen und das Fahrzeug aus dem Ausfahrbereich 4 ausfahren kann. Ist der Fahrer reaktionsschnell und fährt sein Fahrzeug A umgehend nach Aufleuchten des Grünlichts 16 aus der Fahrzeugbehandlungsanlage 1 heraus, läuft die Fördereinrichtung 2 ungebremst weiter und transportiert das Fahrzeug B zum Ausfahrbereich 4. Das selbsttätige Ausfahren ist in Fig. 2 c) und d) durch einen Pfeil 17 gekennzeichnet. Sobald die Lichtschranke 13 erkennt, dass das Fahrzeug A die Fördereinrichtung 2 verlassen hat, springt die Ampel 14 wieder auf Rotlicht 15, um dem Fahrer des nachfolgenden Fahrzeugs B zu signalisieren, dass er noch nicht selbsttätig ausfahren soll.

Bei der bekannten Behandlungseinrichtung 1 und Fördereinrichtung 2 besteht das Problem, dass viele Fahrer nicht schnell genug auf das abrupte Umspringen der Ampel 14 von Rotlicht 15 auf Grünlicht 16 reagieren. Da in der Fahrzeugbehandlungsanlage 1 üblicherweise der Motor aus und das Getriebe ausgekuppelt ist, muss nach dem Aufleuchten des Grünlichts 16 und vor dem Ausfahren erst der Motor angelassen und das Getriebe eingekuppelt werden. Benötigt der Fahrer des im Ausfahrbereich 4 befindlichen vorderen Fahrzeugs A hierfür zu lange, so erkennt die Steuerung mittels der Lichtschranke 13 und ggf. dem weiterem Ausfahrdetektor, dass der Ausfahrbereich 4 noch nicht frei ist und hält die Fördereinrichtung 2 an, um eine Kollision des noch von der Fördereinrichtung 2 geschleppten Fahrzeugs B mit dem noch im Ausfahrbereich 4 befindlichen Fahrzeug A sicher zu verhindern.

Gerade bei hohen Fördergeschwindigkeiten der Fördereinrichtung 2 von ca. 12 - 15 m/min ist die Reaktionszeit für den Fahrer des vordersten Fahrzeugs A relativ kurz, weshalb der Fördervorgang in diesem Fall relativ oft unterbrochen wird. Auch sind inzwischen viele Fahrzeugen, insbesondere Automatikfahrzeuge, mit Sonderfunktionen wie Parkautomatik, Diebstahlsperre etc. ausgestattet, welche vor allem bei unerfahrenen Fahrern dazu führen, dass diese nach dem plötzlichen Umschalten der Ampel 14 von Rotlicht 15 auf Grünlicht 16 nicht in der Lage sind, das Fahrzeug schnell genug in Gang zu setzen und aus dem Ausfahrbereich 4 herauszufahren.

Die US 2006/0144430 A1 offenbart eine manuell zu bedienende Fahrzeugwaschanlage, bei der das Fahrzeug in einen Waschbereich gefahren wird. Dort wird Geld in einen Münzautomaten eingeworfen, und entsprechend der eingeworfenen Geldmenge kann dann eine bestimmte Zeit lang das Fahrzeug manuell gereinigt werden, beispielsweise über eine Schaumlanze. Vor Ablauf der durch die Geldmenge bestimmten Reinigungszeit wird dann der Waschperson mitgeteilt, wie viel Zeit noch bis zum Ende der bezahlten Reinigungszeit übrig ist.

Die US 2005/0234569 A1 offenbart ebenfalls eine Fahrzeugwaschanlage mit beim Waschen in einer Waschbucht ortsfest stehenden Fahrzeug, wobei dort in einen Münzautomaten Geld eingeworfen und entsprechend der eingeworfenen Geldmenge dann eine bestimmte Zeit lang das Fahrzeug gereinigt werden kann. Vor Ablauf der durch die Geldmenge bestimmten Reinigungszeit wird dann dem außerhalb des Fahrzeugs wartenden Fahrer mitgeteilt, wie viel Zeit noch bis zum Ende der bezahlten Reinigungszeit übrig ist.

Der Erfindung liegt deshalb die Aufgabe zugrunde, eine Fahrzeugbehandlungsanlage sowie ein Verfahren zu deren Betrieb bereitzustellen, welche die oben genannten Nachteile überwinden und dem Fahrer des vordersten in der Fahrzeugbehandlungsanlage befindlichen oder geförderten Fahrzeugs frühzeitig signalisieren, dass er in Kürze aus der Fahrzeugbehandlungsanlage ausfahren kann und somit ausreichend Zeit hat, sich hierauf vorzubereiten. Weiter sollen Stopps oder Verlangsamungen des Betriebs der Fahrzeugbehandlungsanlage und der Fördereinrichtung aufgrund verzögerter Ausfahrten des vordersten Fahrzeugs verhindert werden, um eine möglichst hohe Durchfahrrate an Fahrzeugen und somit möglichst viele Behandlungen in vorgegebener Zeit zu ermöglichen.

Die Erfindung löst diese Aufgabe durch eine Fahrzeugsbehandlungsanlage mit den Merkmalen des Anspruchs 1 und ein Verfahren zu deren Betrieb mit den Merkmalen des Anspruchs 11. Vorteilhafte Ausgestaltungen und zweckmäßige Weiterbildungen der Erfindung sind in den abhängigen Ansprüchen angegeben.

Eine eingangs genannte Fahrzeugbehandlungsanlage ist erfindungsgemäß dadurch gekennzeichnet, dass die Signaleinrichtung zum Ausgeben eines Ausfahrsignals und zum Ausgeben eines das Ausfahrsignal ankündigenden Vorwarnsignals während einer Vorwarnzeit eingerichtet ist. Bevorzugt kann die Fahrzeugbehandlungsanlage eine Durchfahranlage sein, bei der das Fahrzeug bei einer Einfahrt einfahren und bei einer Ausfahrt ausfahren kann und mittels Fördereinrichtung in Förderrichtung durch die Fahrzeugbehandlungsanlage zur Ausfahrt geschleppt wird.

Bevorzugt kann es sich bei der Fahrzeugbehandlungsanlage um eine Fahrzeugreinigungsanlage zum Waschen von Fahrzeugen mit Waschbürsten und/oder Hochdruckreinigungsanlagen, zum Aufbringen von Wachs und/oder Polieren der Fahrzeugoberflächen.

Ist die Fahrzeugbehandlungsanlage eine Portalanlage, bei der der Fahrer das Fahrzeug einfährt, anschließend das Behandlungsportal zum Behandeln des stillstehenden Fahrzeugs dann ein oder bevorzugt mehrmals über das Fahrzeug hinwegfährt, so wird die Vorwarnzeit anhand der der Steuerung bekannten, noch für die Behandlung des Fahrzeugs vorhandenen Zeit bestimmt. Dabei kann ein fester Wert für die Vorwarnzeit vorgegeben in der Steuerung vorgegeben werden, wobei die Ausgabe des Vorwarnsignal dann beginnt, wenn bis zum Ende der Behandlung des Fahrzeugs nur noch die Vorwarnzeit verbleibt. Der Fahrer kann dann mit dem Ende der Behandlung des Fahrzeugs aus der Fahrzeugbehandlungsanlage ausfahren. Gegebenenfalls kann aus Sicherheitsgründen die Ausgabe des Vorwarnsignals auch etwas verzögert werden, so dass die Vorwarnzeit erst nach dem Ende der Behandlung des Fahrzeugs beginnt. Damit kann verhindert werden, dass ungeduldige Fahrer zu früh aus der Fahrzeugbehandlungsanlage ausfahren und dabei die Behandlungseinrichtung und/oder das Fahrzeug beschädigen oder sich selbst gefährden.

Die Signaleinrichtung kann vorteilhaft eine optische Anzeige und/oder eine akustische Ausgabeeinrichtung aufweisen, welche aus einem oder mehreren Teilen bestehen, die örtlich verteilt oder konzentriert angeordnet sein können. Die akustische Ausgabeeinrichtung kann bevorzugt eine Sprachausgabeeinrichtung aufweisen, um dem Fahrer das Vorwarnsignal textlich übermitteln zu können.

Vorzugsweise kann das Vorwarnsignal ein Countdown sein, mittels dem dem Fahrer des für die Ausfahrt vorgesehenen Fahrzeugs angezeigt werden kann, wie lange es noch bis zur Freigabe der Ausfahrt dauert, so dass er sich hierauf vorbereiten kann. Bevorzugt kann der Countdown zwischen 3 und 8 Stufen und bevorzugt zwischen 5 und 7 Stufen aufweist, von denen er bis zur Ausgabe des Ausfahrsignals herunterzählt. In einer vorteilhaften Ausführung sind Intervalle zwischen Stufen des Countdowns gleich lang. Bevorzugt kann die Vorwarnzeit zwischen 10 und 3 Sekunden, besonders bevorzugt zwischen 7 und 5 Sekunden und ganz besonders bevorzugt 6 Sekunden betragen.

In einer vorteilhaften Ausführung kann die Fördereinrichtung zum Schleppen des Fahrzeugs in Förderrichtung eine Vielzahl von in gleichen Abständen an einem Förderelement, beispielsweise einem bevorzugt endlos umlaufenden Förderband oder Förderkette, angeordnete Schleppmittel, beispielsweise Schlepprollen oder Schleppschuhe, aufweisen kann. Bevorzugt verläuft ein Teil des Förderelements unter dem Boden der Fahrzeugbehandlungsanlage.

In einer bevorzugten Weiterbildung kann dabei am in Förderrichtung hinteren Ende der Fördereinrichtung ein Schleppmittel-Detektor vorgesehen sein, der das Weggehen eines Schleppmittels von einem Reifen des geschleppten Fahrzeugs detektiert. Bevorzugt kann der Schleppmittel-Detektor oder auch andere, an sich bekannte Detektoren vorgesehen sein, die Erkennen, dass Mittels eines Schleppmittels ein Fahrzeug geschleppt wird, beispielsweise Kontaktsensoren oder Kraftsensoren. Entsprechend kann auch an der Einfahrt der Fahrzeugbehandlungsanlage das Erfassen eines Reifens durch das Schleppmittel erfasst werden und in der Steuerung diesem Schleppmittel zugeordnet werden.

Weiter kann vorteilhaft am in Förderrichtung hinteren Ende der Fördereinrichtung eine Förderende-Detektor, beispielsweise eine Lichtschranke, vorgesehen sein, der das Verlassen der Fördereinrichtung durch das Fahrzeug detektiert. Bevorzugt kann im Ausfahrbereich oder in Förderrichtung nach dem Ausfahrbereich ein Ausfahr-Detektor, beispielsweise eine Lichtschranke, vorgesehen sein, der das Verlassen des Ausfahrbereichs durch das Fahrzeug detektiert. Bevorzugt können die oben beschriebenen Detektoren mit der Steuerung verbunden sein.

Die Steuerung kann in an sich bekannter Weise ausgebildet sein und einen Steuerrechner oder ein über ein Netzwerk oder Bussystem verbundenes Rechnersystem aufweisen. Bevorzugt kann die Steuerung eine Vorrichtung zur Berechnung der zwischen der Ausgabe des Vorwarnsignals und des Ausfahrsignals verbleibenden Vorwarnzeit aufweist.

Ein eingangs genanntes vorteilhaftes Verfahren zum Betrieb einer insbesondere oben und nachfolgend beschriebenen erfindungsgemäßen Fahrzeugbehandlungsanlage mit mindestens einer Behandlungseinrichtung für ein zu behandelndes Fahrzeug, einem Ausfahrbereich für das Fahrzeug und einer im oder am Ausfahrbereich angeordneten Signaleinrichtung, wobei nach dem Ende der Behandlung und/oder eines Transport des Fahrzeugs mittels der Fördereinrichtung der Fahrzeugbehandlungsanlage von der Signaleinrichtung ein Ausfahrsignal ausgegeben wird, ist erfindungsgemäß dadurch gekennzeichnet, dass von der Signaleinrichtung vor dem Ausgeben des Ausfahrsignals für eine Vorwarnzeit ein das Ausfahrsignal ankündigendes Vorwarnsignal ausgegeben wird.

Bevorzugt kann dabei das Vorwarnsignal noch während der Behandlung und/oder des Transports des Fahrzeugs ausgegeben werden, so dass sich der Fahrer des zur Ausfahrt anstehenden Fahrzeugs auf die Ausfahrt vorbereiten kann. Um ein zu frühes Ausfahren des Fahrzeugs zu verhindern, kann vorteilhaft vor der Ausgabe des Vorwarnsignals ein Stoppsignal ausgegeben werden.

Wird während der Vorwarnzeit die Behandlung und/oder der Transport des Fahrzeugs unterbrochen, so kann vorteilhaft das Vorwarnsignal unterbrochen und das Stoppsignal ausgegeben werden, um ein fehlerhaftes Ausfahren des Fahrzeugs und ggf. eine Beschädigung des Fahrzeugs oder der Fahrzeugbehandlungsanlage zu vermeiden.

Vorteilhaft kann der Zeitpunkt bestimmt werden, an dem das Fahrzeug einen Endbereich der Fördereinrichtung erreicht, und der Beginn der Vorwarnzeit auf diesen oder einen durch eine Verzögerung bestimmbaren späteren Zeitpunkt festgelegt werden. Bevorzugt kann dabei der Zeitpunkt, an dem das Fahrzeug den Endbereich der Fördereinrichtung erreicht, dadurch bestimmt werden, dass am in Förderrichtung hinteren Ende der Fördereinrichtung das Weggehen eines Schleppmittels der Fördereinrichtung von einem Reifen des geschleppten Fahrzeugs detektiert wird.

Bevorzugt kann eine maximale Vorwarnzeit anhand der Fördergeschwindigkeit der Fördereinrichtung und eines vorgegebenen Abstands zweier aufeinander folgender Schleppmittel der Fördereinrichtung berechnet werden.

Durch die oben beschriebene Vorrichtung und das oben beschriebene Verfahren kann vorteilhaft sichergestellt werden, dass der Fahrer eines kurz vor der Ausfahrt befindlichen Fahrzeugs in einer Fahrzeugbehandlungsanlage das selbsttätige Ausfahren so rechtzeitig vorbereiten kann, dass er mit der Ausgabe des Signals "Ausfahrt frei" ausfahren kann. Hierdurch wird vor allem bei einer Fahrzeugbehandlungseinrichtung mit Fördereinrichtung eine Verlangsamung oder das Anhalten einer Fördereinrichtung in vielen Fällen vermieden werden können, so dass ein hoher Fahrzeugdurchsatz gewährleistet ist. Unerwünschte Unterbrechungen des Fördervorgangs treten dann nur noch in seltenen Fällen auf.

Weitere Besonderheiten und Vorteile der Erfindung ergeben sich aus der folgenden Beschreibung eines bevorzugten Ausführungsbeispiels anhand der Zeichnungen. Diese zeigen:
- **Fig. 1**: eine erfindungsgemäße Fahrzeugsbehandlungsanlage mit Fahrzeugen in unterschiedlichen Förderpositionen a) bis d);
- **Fig. 2**: eine an sich bekannte Fahrzeugbehandlungsanlage mit Fahrzeugen in unterschiedlichen Förderpositionen a) bis d) entsprechend Fig. 1.

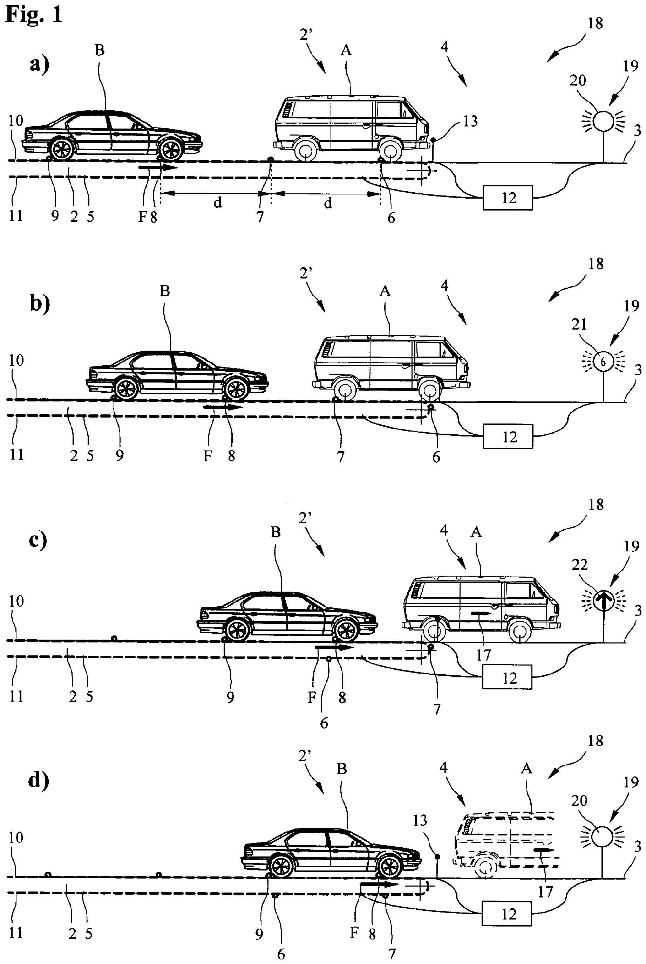

Fig. 1 zeigt eine erfindungsgemäße Fahrzeugbehandlungsanlage 18, welche im Wesentlichen der in Fig. 2 gezeigten, an sich bekannten Fahrzeugbehandlungsanlage 1 entspricht. Es wird deshalb nachfolgend im Wesentlichen auf die Unterschiede eingegangen. Für gleiche Teile werden gleiche Bezeichnungen und gleiche Bezugsziffern verwendet. Insbesondere entsprechend die Positionen der Fahrzeuge A und B in Fig. 2 den in Fig. 1 gezeigten Positionen, so dass die Angaben zu Fig. 1 entsprechend gelten.

Bei der Fahrzeugbehandlungsanlage 18 ist die Ampel 14 der Fahrzeugbehandlungsanlage 1 durch eine vorliegend als optische Anzeige 19 ausgebildete Signaleinrichtung ersetzt, welche wie die Ampel 14 für den Fahrer des vordersten Fahrzeugs A gut sichtbar im Ausfahrbereich 4 angeordnet ist. Die optische Anzeige 19 kann ein Bildschirm oder ein anderes Anzeigemittel sein, welches Zahlen, Ziffern und/oder Zeichen anzeigen kann.

In der in Fig. 1 a) gezeigten Position des vorderen Fahrzeugs A zeigt die Anzeige 19 ein Stoppsignal 20, bevorzugt ein Rotlicht oder das Wort "STOPP" oder "HALT", um dem Fahrer von Fahrzeug A zu signalisieren, dass er noch nicht selbsttätig ausfahren darf. Dies entspricht dem Rotlicht 15 der Ampel 14 in Fig. 2 a).

Gelangt das Fahrzeug A in Fig. 1 b) in die bereits in Fig. 2 b) gezeigte Position, so erhält die Steuerung 12 anhand eines an sich bekannten, als Schleppmittel-Detektors ein Signal von der Fördereinrichtung 2, dass die vordere erste Schlepprolle 6 abgetaucht ist. Alternativ kann die Position der Schlepprolle 6 auch in der Steuerung 12 berechnet werden. Die Steuerung 12 steuert daraufhin die Anzeige 19 so an, dass dort ein Countdown 21 gestartet und angezeigt wird. Dieser signalisiert dem Fahrer des nach kurzem Halt durch die hintere zweite Schlepprolle 7 geförderten Fahrzeugs A, wie viel Zeit noch bis zum Ausfahren in Fig. 1 c) verbleibt. Bis zu der in Fig. 1 c) gezeigten Position zählt dann der Countdown 21 für den Fahrer in der Anzeige 19 gut sichtbar herunter.

In der Fig. 1 c) gezeigten Position gibt die hintere zweite Schlepprolle 7 dann auch den Hinterreifen des Fahrzeugs A frei, so dass ab diesem Zeitpunkt der Fahrer das Fahrzeug A aus dem Ausfahrbereich 3 selbsttätig ausfahren kann. Dies kann in gleicher Weise durch die Fördereinrichtung 2 detektiert werden, wie das Abtauchen der vorderen ersten Schlepprolle 6. Bevorzugt kann hierzu die Lichtschranke 13 verwendet werden, oder aber eine an sich bekannter Schleppmittel-Detektor, der das Fördern eines Fahrzeugs A, B durch eine der Schlepprollen 6 bis 9 sowie das in Ausgriff gelangen vom geschleppten Fahrzeugreifen und/oder Abtauchen der vordersten Schlepprolle 6 detektiert und an die Steuerung 12 weiterleitet.

Dann wird durch die Steuerung 12 an der Anzeige 19 das Signal "Ausfahrt frei" 22 ausgegeben, hier in Form eines, bevorzugt grünen, Pfeils 22, welcher dem Fahrer von Fahrzeug A signalisiert, dass er nun ausfahren kann und soll.

Die oben beschriebene nochmalige Detektion des Abtauchens der Schlepprolle 7 dient als Sicherung, wenn während des Countdowns 21 zwischen Fig. 1 b) und Fig. 1 c) ein unvorgesehenes Ereignis die Fördereinrichtung 2 stoppt, beispielsweise weil im Einfahrbereich ein Problem bei der Einfahrt eines Fahrzeug aufgetreten ist. In diesem Fall werden an der Anzeige 19 das Stoppsignal 20 und/oder eine Mitteilung ausgegeben, die dem Fahrer des Fahrzeugs A mitteilt, dass der Countdown 21 unterbrochen ist und er noch nicht ausfahren darf.

Alternativ kann die Anzeige des Signals "Ausfahrt frei" 22 auch dann erfolgen, wenn das durch die Steuerung 12 berechnete Ende des Countdowns 21 eingetreten ist, was die Steuerung 12 vereinfacht, da der eben genannte Detektionsschritt eingespart wird.

Ist das Fahrzeug A dann in Fig. 1 d) aus dem Ausfahrbereich 4 ausgefahren, so springt die Anzeige 19 wieder zurück auf das Stoppsignal 20, um dem Fahrer des nachfolgenden Fahrzeugs B zu signalisieren, dass er noch nicht selbsttätig ausfahren darf.

Anstelle des hier gezeigte Countdowns 21 von der in Fig. 1 gezeigten Ziffer "6" können auch andere geeignete Signalarten angezeigt werden, um die verbleibende Zeit bis zur Ausfahrtfreigabe zu signalisieren. Beispielsweise kann sich alternativ oder zusätzlich in der Anzeige 19 ein rotes Signal langsam in ein grünes Signal umfärben. Auch können der verbleibenden Zeit bis zum Ausfahren entsprechende Anzahlen von Stoppsignalen, beispielsweise Kreuze oder Rotlichter angezeigt werden, welche dem Countdown 21 entsprechend immer weniger werden, also zuerst 6 rote Kreuze, dann fünf, dann vier etc.

Auch kann die Signaleinrichtung alternativ oder zusätzlich zur optischen Anzeige 19 ein akustisches Signal ausgeben, welche beispielsweise zu Beginn des Countdowns 21 in Fig. 1b) dem Fahrer des Fahrzeugs A akustisch, insbesondere mittels Sprachausgabe, mitteilt, dass die Ausfahrt in 6, 5, 4, 3, 2 und 1 Sekunde erfolgt. Das Signal "Ausfahrt frei" kann dann ebenfalls akustisch, insbesondere mittels Sprachausgabe, zusätzlich oder alternativ zu dem in Fig. 1 c) gezeigten Signal "Ausfahrt frei", also dem Pfeil 22 ausgegeben werden. Auch kann während des Countdowns 21 in Fig. 1 b) bis Fig. 1 c) ein Text an der Anzeige 19 ausgegeben, welcher direkt angibt, dass die "Ausfahrt in X Sekunden" beginnt, wobei das "X" jeweils durch die verbleibende Anzahl von Sekunden ersetzt wird.

Da die Zeit zwischen dem Beginn des Countdowns 21 in Fig. 1 b) und dem Signal "Ausfahrt frei" 22 in Fig. 1 c) von der Geschwindigkeit der Fördereinrichtung 2 abhängt, wird die Anzeige 19 wie nachfolgend beschrieben angesteuert.

Nachdem die Steuerung 12 selbst berechnet oder die Mitteilung eines an sich bekannten Schleppmittel-Detektors erhalten hat, dass die vordere Schlepprolle 6 in Fig. 1 b) unter den Boden 3 abgetaucht ist, berechnet sie anhand des bekannten Abstands d zwischen aufeinander folgenden Schlepprollen 6, 7 und der bekannten Fördergeschwindigkeit der Fördereinrichtung 2 die Vorwarnzeit, also die verbleibende Zeit zwischen Beginn des Countdowns 21 und dem Beginn des Freigabe der Ausfahrt und zeigt diese Vorwarnzeit in Sekunden an der Anzeige 19 an und zählt dann vorzugsweise in Sekundenschritten herunter, in der Ausführung nach Fig. 1 also von 6 Sekunden vom Abtauchen der vorderen Schlepprolle 6 in Fig. 1 b) bis zum Abtauchen der hinteren Schlepprolle 7 in Fig. 1 c), wobei der Countdown 21 in Sekundenschritten von 6, 5, 4, 3, 2, 1 angezeigt wird. Diese Lösung mit der exakten Zeitangabe hat den Vorteil, dass die verbleibende Zeit bis zur Ausfahrt der exakten Zeit und somit dem natürlichen Zeitgefühl des Fahrers entspricht.

Alternativ kann auch anstatt der Anzeige des Werts der Vorwarnzeit, hier 6 Sekunden, und dem Herunterzählen in Sekunden, stets die gleiche Anzahl von Zählschritten als Countdown 21 und somit Maß für die Vorwarnzeit angezeigt werden. Beispielsweise kann dann immer von "5" bis zum Signal "Ausfahrt Frei" 22 heruntergezählt werden, ungeachtet, wie lange die Vorwarnzeit tatsächlich ist. Hierzu wird in der Steuerung 12 wie oben beschrieben die Vorwarnzeit, also die verbleibende Zeit zwischen dem Abtauchen der Schlepprollen 6, 7 berechnet und diese Vorwarnzeit dann in die gewünschten Schritt des vorgegebenen Zählintervalls zwischen dem Startpunkt und Endpunkt des Countdowns 21 aufgeteilt. Beginnt der Countdown beispielsweise standardmäßig bei 5, so geben sich zwischen 5, 4, 3, 2, 1 und 0 (= Signal "Ausfahrt frei" 22) fünf gleichgroße Intervalle. Diese Aufteilung in fest vorgegebene Intervalle hat den Vorteil, dass Benutzer der Fahrzeugwaschanlage bei wiederholter Benutzung immer das gleiche Intervall des Countdowns 21 vorgegeben wird, unabhängig davon, ob die Fördervorrichtung schnell oder langsam läuft.

Fährt die Fördervorrichtung beispielsweise mit 15 Meter pro Minute und beträgt der Abstand d zwischen den aufeinanderfolgenden Schlepprollen 3,2 Meter, so ergibt sich zwischen Beginn des Countdowns in Fig. 1 b) und Auswärtssignal 23 in Fig. 1 c) eine noch verbleibende Zeit von 12,8 Sekunden, welche in die fünf Intervalle aufgeteilt wird, so dass ein Intervall 2,56 Sekunden lang ist.

In beiden oben beschriebenen Fällen kann von der Steuerung 12 nach Berechnung der insgesamt verbleibenden Zeit zwischen dem Abtauchen der beiden Schlepprollen 6, 7, also der maximalen Vorwarnzeit, auch zunächst eine zeitliche Verzögerung bzw. Pause eingefügt werden, bevor der Countdown 21 angezeigt wird. Dies ist für den Fall, dass die Fördergeschwindigkeit langsam ist, z.B. nur 4 Meter pro Minute, von Vorteil. Denn in diesem Fall ergeben sich für die maximale Vorwarnzeit immerhin 48 Sekunden, was für einen sinnvollen Countdown 21 aber zu lange ist, da bei 48 Sekunden die Aufmerksamkeit des Fahrers frühzeitig nachlässt. In diesem Fall könnte als Verzögerung beispielhaft 40 Sekunden eingefügt werden, so dass der Countdown 21 dann 8 Sekunden vor dem Ende der maximalen Vorwarnzeit beginnt. Aber auch bei hoher Fördergeschwindigkeit von 15 Meter pro Minute verbleibt eine maximale Vorwarnzeit von 12,8 Sekunden, so dass auch hier eine Verzögerung zwischen Abtauchen der vorderen Schlepprolle 6 und Start des Countdowns 21 vorteilhaft sein kann. Die Verzögerung kann dabei vorteilhaft so bemessen sein, dass der Countdown 21 immer beim gleichen Wert der Vorwarnzeit beginnt, beispielsweise immer bei 6 Sekunden. Die Vorwarnzeit kann bevorzugt zwischen 10 und 3 Sekunden betragen, besonders bevorzugt zwischen 7 und 5 Sekunden und ganz besonders bevorzugt 6 Sekunden.

Auf jeden Fall ist es für den Fahrer des ausfahrenden Fahrzeugs A von Vorteil, wenn der Countdown 21 mindestens eine dreistufige Anzeige vor Anzeige des Signals "Ausfahrt frei" aufweist, der Countdown 21 also mindestens bei "3" oder einem entsprechenden Signal beginnt, um noch genügend Zeit für das Anlassen des Motors und Einlegen des Gangs bzw. der Fahrstufe zu haben. Besonders vorteilhaft sind vier- bis sechsstufige Anzeigen, da erfahrungsgemäß ein bis zwei Schritte vergehen, bis der Fahrer des ausfahrenden Fahrzeugs A den Countdown 21 wahrnimmt und beginnt, sich auf das Ausfahren einzustellen. Ist der Countdown zu lang, beispielsweise mehr als acht Schritte, so wird der Fahrer erfahrungsgemäß ungeduldig und verliert die Aufmerksamkeit.

### Bezugszeichenliste

- 1: bekannte Fahrzeugbehandlungsanlage
- 2: Fördereinrichtung
- 2': Endbereich der Fördereinrichtung
- 3: Boden Fahrzeugbehandlungsanlage
- 4: Ausfahrbereich
- 5: Förderband
- 6: erste vordere Schlepprolle
- 7: zweite hintere Schlepprolle
- 8: dritte vordere Schlepprolle
- 9: vierte hintere Schlepprolle
- 10: Obertrum Förderband
- 11: Untertrum Förderband
- 12: Steuerung
- 13: Lichtschranke
- 14: Ampel
- 15: Rotlicht
- 16: Grünlicht
- 17: Fahrzeug fährt selbstständig aus
- 18: erfindungsgemäße Fahrzeugbehandlungsanlage
- 19: Signaleinrichtung
- 20: Signal Stopp
- 21: Countdown
- 22: Signal Ausfahrt frei

- A: Vorderes Fahrzeug
- B: Hinteres Fahrzeug
- F: Förderrichtung Fahrzeuge
- d: Abstand Schlepprollen

## Patentansprüche

1. Fahrzeugbehandlungsanlage (1) mit mindestens einer Behandlungseinrichtung für ein zu behandelndes Fahrzeug (A), einem Ausfahrbereich (4) für das Fahrzeug (A), einer Steuerung (12) und einer mit der Steuerung (12) verbundenen, im oder am Ausfahrbereich (4) angeordneten Signaleinrichtung (19), wobei die Fahrzeugbehandlungsanlage (1) eine Fördereinrichtung (2) zum Transport des Fahrzeugs (A) in einer Förderrichtung (F) durch die Fahrzeugbehandlungsanlage (1) zum Ausfahrbereich (4) hin aufweist, **dadurch gekennzeichnet, dass** die Signaleinrichtung (19) zum Ausgeben eines Ausfahrsignals (22) und zum Ausgeben eines das Ausfahrsignals (22) ankündigenden Vorwarnsignals (21) während einer Vorwarnzeit eingerichtet ist.

2. Fahrzeugbehandlungsanlage (1) nach Anspruch 1, **dadurch gekennzeichnet, dass** das Vorwarnsignal ein Countdown (21) ist.

3. Fahrzeugbehandlungsanlage (1) nach Anspruch 2, **dadurch gekennzeichnet, dass** der Countdown (21) zwischen 3 und 8 Stufen und bevorzugt zwischen 5 und 7 Stufen aufweist, und/oder dass Intervalle zwischen Stufen des Countdowns (21) gleich lang sind.

4. Fahrzeugbehandlungsanlage (1) nach einem der Ansprüche 2 bis 3, **dadurch gekennzeichnet, dass** die Vorwarnzeit zwischen 10 und 3 Sekunden, bevorzugt zwischen 7 und 5 Sekunden und besonders bevorzugt 6 Sekunden beträgt.

5. Fahrzeugbehandlungsanlage (1) nach einem der voranstehenden Ansprüche, **dadurch gekennzeichnet, dass** die Fördereinrichtung (2) zum Schleppen des Fahrzeugs (A) in Förderrichtung (F) eine Vielzahl von in gleichen Abständen (d) an einem Förderelement (5) angeordnete Schleppmittel (6-9) aufweist.

6. Fahrzeugbehandlungsanlage (1) nach Anspruch 5, **dadurch gekennzeichnet, dass** am in Förderrichtung (F) hinteren Ende der Fördereinrichtung (2) ein Schleppmittel-Detektor vorgesehen ist, der das Weggehen eines Schleppmittels (6-9) von einem Reifen des geschleppten Fahrzeugs (A) detektiert.

7. Fahrzeugbehandlungsanlage (1) nach einem der voranstehenden Ansprüche, **dadurch gekennzeichnet, dass** am in Förderrichtung (F) hinteren Ende der Fördereinrichtung (2) ein Förderende-Detektor (13) vorgesehen ist, der das Verlassen der Fördereinrichtung (2) durch das Fahrzeug (A) detektiert, und/oder dass im Ausfahrbereich (4) oder in Förderrichtung (F) nach dem Ausfahrbereich (4) ein Ausfahr-Detektor vorgesehen ist, der das Verlassen des Ausfahrbereichs (4) durch das Fahrzeug (A) detektiert.

8. Fahrzeugbehandlungsanlage (1) nach einem der voranstehenden Ansprüche, **dadurch gekennzeichnet, dass** die Steuerung (12) eine Vorrichtung zur Berechnung der zwischen der Ausgabe des Vorwarnsignals (21) und des Ausfahrsignals (22) verbleibenden Vorwarnzeit aufweist.

9. Verfahren zum Betrieb einer Fahrzeugbehandlungsanlage (1), insbesondere nach einem der Ansprüche 1 bis 8, mit mindestens einer Behandlungseinrichtung für ein zu behandelndes Fahrzeug (A), einem Ausfahrbereich (4) für das Fahrzeug (A), einer Fördereinrichtung (2) zum Transport des Fahrzeugs (A) in einer Förderrichtung (F) durch die Fahrzeugbehandlungsanlage (1) zum Ausfahrbereich (4) hin, und einer im oder am Ausfahrbereich (4) angeordneten Signaleinrichtung (19), wobei nach dem Ende der Behandlung und/oder eines Transport des Fahrzeugs (A) mittels der Fördereinrichtung (2) der Fahrzeugbehandlungsanlage (1) von der Signaleinrichtung (19) ein Ausfahrsignal (22) ausgegeben wird, **dadurch gekennzeichnet, dass** von der Signaleinrichtung (19) vor dem Ausgeben des Ausfahrsignals (22) für eine Vorwarnzeit ein das Ausfahrsignal (22) ankündigendes Vorwarnsignal (21) ausgegeben wird.

10. Verfahren nach Anspruch 9, **dadurch gekennzeichnet, dass** das Vorwarnsignal (21) noch während der Behandlung und/oder des Transports des Fahrzeugs (A) ausgegeben wird.

11. Verfahren nach Anspruch 9 oder 10, **dadurch gekennzeichnet, dass** vor der Ausgabe des Vorwarnsignals (21) ein Stoppsignal (20) ausgegeben wird.

12. Verfahren nach Anspruch 11, **dadurch gekennzeichnet, dass** das Vorwarnsignal (21) unterbrochen und das Stoppsignal (20) ausgegeben wird, wenn während der Vorwarnzeit die Behandlung und/oder der Transport des Fahrzeugs (A) oder der Betrieb der Fahrzeugbehandlungsanlage (1) unterbrochen wird.

13. Verfahren nach einem der Ansprüche 9 bis 12, **dadurch gekennzeichnet, dass** das Vorwarnsignal ein Countdown (21) ist, der die bis zum Ausfahrsignal (22) ablaufende Vorwarnzeit anzeigt.

14. Verfahren nach einem der Ansprüche 9 bis 13, **gekennzeichnet durch** Bestimmen des Zeitpunkts, an dem das Fahrzeug (A) einen Endbereich (2') der Fördereinrichtung (2) erreicht, und Festlegen des Beginns der Vorwarnzeit auf diesen oder einen durch eine Verzögerung bestimmbaren späteren Zeitpunkt.

15. Verfahren nach Anspruch 14, **dadurch gekennzeichnet, dass** der Zeitpunkt, an dem das Fahrzeug (A) den Endbereich (2') der Fördereinrichtung (2) erreicht, dadurch bestimmt wird, dass am in Förderrichtung (F) hinteren Ende der Fördereinrichtung (2) das Weggehen eines Schleppmittels (6-9) der Fördereinrichtung (2) von einem Reifen des geschleppten Fahrzeugs (A) detektiert wird.

16. Verfahren nach einem der Ansprüche 9 bis 15, **dadurch gekennzeichnet, dass** eine maximale Vorwarnzeit anhand der Fördergeschwindigkeit der Fördereinrichtung (2) und eines vorgegebenen Abstands (d) zweier aufeinanderfolgender Schleppmittel (6-9) der Fördereinrichtung (2) berechnet wird.

## Claims

1. Vehicle treatment installation (1) having at least one treatment device for a vehicle (A) which is to be treated, an exiting region (4) for the vehicle (A), a controller (12) and a signal device (19) which is connected to the controller (12) and is arranged in or at the exiting region (4), wherein the vehicle treatment installation (1) has a conveyor device (2) for transporting the vehicle (A) in a conveying direction (F) through the vehicle treatment installation (1) to the exiting region (4), **characterized in that** the signal device (19) is configured to output an exiting signal (22) and to output a pre-warning signal (21) announcing the exiting signal (22), during a pre-warning time.

2. Vehicle treatment installation (1) according to Claim 1, **characterized in that** the pre-warning signal is a countdown (21).

3. Vehicle treatment installation (1) according to Claim 2, **characterized in that** the countdown (21) has between 3 and 8 stages and preferably between 5 and 7 stages, and/or **in that** intervals between stages of the countdown (21) are of equal length.

4. Vehicle treatment installation (1) according to one of Claims 2 to 3, **characterized in that** the pre-warning time is between 10 and 3 seconds, preferably between 7 and 5 seconds and is particularly preferably 6 seconds.

5. Vehicle treatment installation (1) according to one of the preceding claims, **characterized in that** the conveyor device (2) has, for towing the vehicle (A) in the conveying direction (F), a multiplicity of towing means (6-9) which are arranged at equal intervals (D) on a conveyor element (5).

6. Vehicle treatment installation (1) according to Claim 5, **characterized in that** a towing means detector, which detects the movement of a towing means (6-9) away from a tyre of the towed vehicle (A), is provided at the end of the conveyor device (2) which is at the rear in the conveying direction (F).

7. Vehicle treatment installation (1) according to one of the preceding claims, **characterized in that** a conveyor end detector (13), which detects the exiting of the conveyor device (2) by the vehicle (A), is provided at the end of the conveyor device (2) which is at the rear in the conveying direction (F), and/or **in that** an exiting detector, which detects the exiting of the exiting region (4) by the vehicle (A), is provided in the exiting region (4) or after the exiting region (4) in the conveying direction (F).

8. Vehicle treatment installation (1) according to one of the preceding claims, **characterized in that** the controller (12) has a device for calculating the pre-warning time which remains between the outputting of the pre-warning signal (21) and of the exiting signal (22).

9. Method for operating a vehicle treatment installation (1), in particular according to one of Claims 1 to 8, having at least one treatment device for a vehicle (A) which is to be treated, an exiting region (4) for the vehicle (A), a conveyor device (2) for transporting the vehicle (A) in a conveying direction (F) through the vehicle treatment installation (1) to the exiting region (4), and a signal device (19) which is arranged in or at the exiting region (4), wherein an exiting signal (22) is output by the signal device (19) after the end of the treatment and/or of transportation of the vehicle (A) by means of the conveyor device (2) of the vehicle treatment installation (1), **characterized in that** a pre-warning signal (21) which announces the exiting signal (22) is output for a pre-warning time by the signal device (19) before the outputting of the exiting signal (22).

10. Method according to Claim 9, **characterized in that** the pre-warning signal (21) is output during the treatment and/or the transportation of the vehicle (A) .

11. Method according to Claim 9 or 10, **characterized in that** a stop signal (20) is output before the outputting of the pre-warning signal (21).

12. Method according to Claim 11, **characterized in that** the pre-warming signal (21) is interrupted and the stop signal (20) is output if the treatment and/or the transportation of the vehicle (A) or the operation of the vehicle treatment installation (1) are/is interrupted during the pre-warning time.

13. Method according to one of Claims 9 to 12, **characterized in that** the pre-warning signal is a countdown (21) which indicates the pre-warning time running up to the exiting signal (22).

14. Method according to one of Claims 9 to 13, **characterized by** determination of the time at which the vehicle (A) reaches an end region (2') of the conveyor device (2), and definition of the start of the pre-warning time at this time or at a later time which can be determined by a delay.

15. Method according to Claim 14, **characterized in that** the time at which the vehicle (A) reaches the end region (2') of the conveyor device (2) is determined by virtue of the fact that the movement of a towing means (6-9) of the conveyor device (2) away from a tyre of the towed vehicle (A) is detected at the end of the conveyor device (2) which is at the rear in the conveying direction (F) .

16. Method according to one of Claims 9 to 15, **characterized in that** a maximum pre-warning time is calculated on the basis of the conveying speed of the conveyor device (2) and of a predefined distance (d) between two successive towing means (6-9) of the conveyor device (2).

## Revendications

1. Installation de traitement de véhicules (1), comprenant au moins un dispositif de traitement pour un véhicule (A) à traiter, une zone de sortie (4) pour le véhicule (A), une commande (12) et un dispositif de signalisation (19) relié à la commande (12) et disposé dans la zone de sortie (4) ou au niveau de celle-ci, l'installation de traitement de véhicules (1) possédant un dispositif de transport (2) destiné à transporter le véhicule (A) dans une direction de transport (F) à travers l'installation de traitement de véhicules (1) vers la zone de sortie (4), **caractérisée en ce que** le dispositif de signalisation (19) est conçu pour délivrer un signal de sortie (22) et pour délivrer, pendant une durée de préalerte, un signal de préalerte (21) annonçant le signal de sortie (22).

2. Installation de traitement de véhicules (1) selon la revendication 1, **caractérisée en ce que** le signal de préalerte est un décompte (21).

3. Installation de traitement de véhicules (1) selon la revendication 2, **caractérisée en ce que** le décompte (21) possède entre 3 et 8 paliers et de préférence entre 5 et 7 paliers et/ou **en ce que** les intervalles entre les paliers du décompte (21) sont de longueur identique.

4. Installation de traitement de véhicules (1) selon l'une des revendications 2 à 3, **caractérisée en ce que** la durée de préalerte est comprise entre 10 et 3 secondes, de préférence entre 7 et 5 secondes et notamment de préférence égale à 6 secondes.

5. Installation de traitement de véhicules (1) selon l'une des revendications précédentes, **caractérisée en ce que** le dispositif de transport (2), en vue de remorquer le véhicule (A) dans la direction de transport (F), possède une pluralité de moyens de remorquage (6-9) disposés à des écarts (d) identiques au niveau d'un élément de remorquage (5).

6. Installation de traitement de véhicules (1) selon la revendication 5, **caractérisée en ce qu'**un détecteur de moyen de remorquage se trouve au niveau de l'extrémité arrière du dispositif de transport (2) dans la direction de transport (F), lequel détecte l'éloignement d'un moyen de remorquage (6-9) d'un pneu du véhicule (A) remorqué.

7. Installation de traitement de véhicules (1) selon l'une des revendications précédentes, **caractérisée en ce qu'**un détecteur de fin de transport (13) se trouve au niveau de l'extrémité arrière du dispositif de transport (2) dans la direction de transport (F), lequel détecte le fait que le véhicule (A) quitte le dispositif de transport (2), et/ou **en ce qu'**un détecteur de sortie se trouve dans la zone de sortie (4) ou après la zone de sortie (4) dans la direction de transport (F), lequel détecte le fait que le véhicule (A) quitte la zone de sortie (4).

8. Installation de traitement de véhicules (1) selon l'une des revendications précédentes, **caractérisée en ce que** la commande (12) possède un arrangement destiné à calculer la durée de préalerte restante entre la délivrance du signal de préalerte (21) et du signal de sortie (22).

9. Procédé pour faire fonctionner une installation de traitement de véhicules (1), notamment selon l'une des revendications 1 à 8, comprenant au moins un dispositif de traitement pour un véhicule (A) à traiter, une zone de sortie (4) pour le véhicule (A), un dispositif de transport (2) destiné à transporter le véhicule (A) dans une direction de transport (F) à travers l'installation de traitement de véhicules (1) vers la zone de sortie (4), et un dispositif de signalisation (19) disposé dans la zone de sortie (4) ou au niveau de celle-ci, un signal de sortie (22) étant délivré par le dispositif de signalisation (19) après la fin du traitement et/ou d'un transport du véhicule (A) au moyen du dispositif de transport (2) de l'installation de traitement de véhicules (1), **caractérisé en ce qu'**un signal de préalerte (21) annonçant le signal de sortie (22) est délivré par le dispositif de signalisation (19) pendant une durée de préalerte avant la délivrance du signal de sortie (22).

10. Procédé selon la revendication 9, **caractérisé en ce que** le signal de préalerte (21) est délivré encore pendant le traitement et/ou le transport du véhicule (A).

11. Procédé selon la revendication 9 ou 10, **caractérisé en ce qu'**un signal d'arrêt (20) est délivré avant la délivrance du signal de préalerte (21).

12. Procédé selon la revendication 11, **caractérisé en ce que** le signal de préalerte (21) est interrompu et le signal d'arrêt (20) est délivré si, pendant la durée de préalerte, le traitement et/ou le transport du véhicule (A) ou le fonctionnement de l'installation de traitement de véhicules (1) sont interrompus.

13. Procédé selon l'une des revendications 9 à 12, **caractérisé en ce que** le signal de préalerte est un décompte (21) qui affiche, jusqu'au signal de démarrage (22), la durée de préalerte qui s'écoule.

14. Procédé selon l'une des revendications 9 à 13, **caractérisé par** la détermination de l'instant auquel le véhicule (A) atteint une zone finale (2') du dispositif de transport (2), et la fixation du début de la durée de préalerte à celui-ci ou à un instant ultérieur pouvant être défini par un retard.

15. Procédé selon la revendication 14, **caractérisé en ce que** l'instant auquel le véhicule (A) atteint la zone finale (2') du dispositif de transport (2) est défini par le fait que l'éloignement d'un moyen de remorquage (6-9) du dispositif de transport (2) d'un pneu du véhicule (A) remorqué est détecté au niveau de l'extrémité arrière, dans la direction de transport (F), du dispositif de transport (2).

16. Procédé selon l'une des revendications 9 à 15, **caractérisé en ce qu'**une durée de préalerte maximale est calculée à l'aide de la vitesse de transport du dispositif de transport (2) et d'un écart (d) prédéfini entre deux moyens de remorquage (6-9) successifs du dispositif de transport (2).
